**Europäisches Patentamt**

**European Patent Office**

**Office européen des brevets**

(19)

(11) Publication number : **0 350 213 B1**

(12) # EUROPEAN PATENT SPECIFICATION

(45) Date of publication of patent specification :
03.02.93 Bulletin 93/05

(51) Int. Cl.⁵ : **B01D 39/18**

(21) Application number : **89306657.1**

(22) Date of filing : **30.06.89**

(54) **Paper filter element.**

(30) Priority : **08.07.88 GB 8816264**

(43) Date of publication of application :
**10.01.90 Bulletin 90/02**

(45) Publication of the grant of the patent :
**03.02.93 Bulletin 93/05**

(84) Designated Contracting States :
**DE FR IT**

(56) References cited :
EP-A- 0 262 596
DE-A- 2 834 914
US-A- 2 834 730
US-A- 4 033 881

(73) Proprietor : **AC ROCHESTER OVERSEAS
CORPORATION (a Delaware corporation)
3044 West Grand Boulevard
Detroit Michigan 48202 (US)**

(72) Inventor : **Kemp, Stanley William
42 Greenfields Avenue Totton
Southampton Hampshire S04 LS (GB)**

(74) Representative : **Haines, Arthur Donald et al
Patent Section 1st Floor Gideon House 28
Chapel Street
Luton, Bedfordshire LU1 2SE (GB)**

## Description

This invention relates to paper filter elements for use in filtering fluids associated with the operation of motor vehicle internal combustion engines, in particular with oil filter elements and air filter elements formed from a paper formed from a variety of fibres as specified in the preamble of claim 1, for example as disclosed in US-A-4,033,881.

The use of pleated paper elements in both oil filters and in air filters on motor vehicle internal combustion engines to remove particulate materials is well-known. A recent development in the field of such elements is the incorporation within the paper of the element of measured quantities of glass fibres, each of which fibres has a substantially circular cross-section with a diameter of the order of 3 micrometres ($\mu$m). The resulting paper filter element thus produced, when used as an oil filter, has been shown to be capable of removing a greater proportion of fine particulate materials from engine oil than a comparable pleated paper element formed solely from cellulose fibres. Consequently engine tests have shown that the finer filtering action of such paper filter elements containing glass fibres on engine oil produces a measurable decrease in engine wear.

Unfortunately, it has been found that paper filter elements containing glass fibre have to be made industrially under stringent regulations of dust avoidance, due to the potential health hazard presented by fine particles and fibres of glass, which tends to make the industrial production of such filter elements expensive. Moreover, it has been found that such filter elements containing glass fibre tend to clog faster, when in use, than comparable pleated paper elements formed solely from cellulose fibres, and thus have a shorter service life.

A paper filter element according to the present invention is characterised by the features specified in the characterising portion of claim 1.

Preferably the paper filter element contains 15% to 35% by weight of said viscose rayon fibres.

An embodiment of the paper filter element according to the present invention, for filtering solid material from vehicle engine oil, is one in which the air resistance of the paper filter element is in the range of 205.94 to 264.78 Pa (21 to 27 millimetres (mm) water gauge).

A preferred embodiment of such a paper filter element, for filtering solid material from vehicle engine oil, is one in which the full flow rig life, as will hereinafter be defined, of the paper filter element is at least 5 hours, and the paper filter element, when in use, retains 95% to 98% of all particles present in the oil to be filtered that have an average diameter in the range of 17 to 22 micrometres.

The invention and how it may be performed are hereinafter particular described with reference to the accompanying drawings, in which:

Figure 1 is a graph of particle size plotted against particle retention efficiency, showing the particle retention efficiency of a known paper filter element containing glass fibre compared to that of a standard paper filter element;

Figure 2 is a graph drawn to a logarithmic scale, showing the particle retention efficiency of two paper filter elements according to the present invention compared to the known paper filter element containing glass fibre shown in Figure 1;

Figure 3 is a graph of rig life plotted against pressure difference, using a standard dust contaminant, of samples of the three paper filter elements shown in Figure 2;

Figure 4 is a graph of rig life plotted against pressure difference, using a high carbon-content standard engine sludge, of samples of the three paper filter elements shown in Figure 2;

Figure 5 is a graph of flow rate plotted against pressure difference, using a known warm engine oil, for samples of the three paper filter elements shown in Figure 2; and

Figure 6 is a graph of flow rate plotted against pressure difference, using a known cold engine oil, for samples of the three paper filter elements shown in Figure 2.

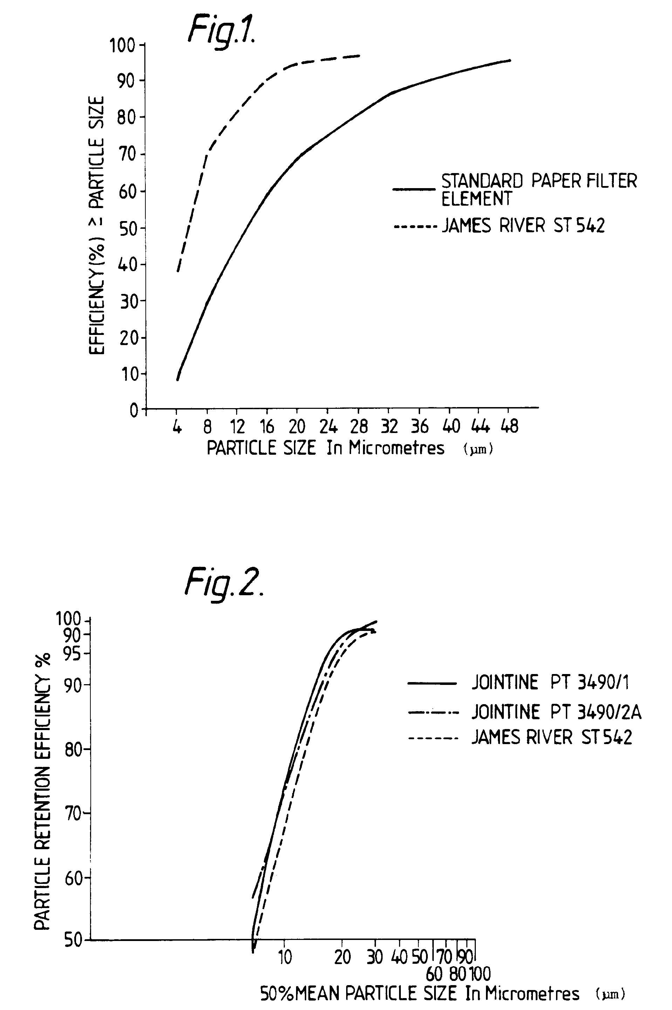

Considering firstly the graph shown in Figure 1, this graph displays the results of testing a known paper filter element containing 5% by weight of glass fibre (a commercially-available paper filter element sold under the trade name of "James River ST 542") against a standard paper filter element formed from cellulose fibres, using a single pass technique for each test in which a known quantity of engine oil containing a predefined quantity of a standard dust contaminant of a predefined average size is passed once through a predetermined area of a sample of the paper filter element, followed by a determination of the proportion of the dust contaminant retained by the sample. By using a range of standard dust contaminants of differing average sizes in such tests, it is possible to obtain the numerical data required to plot the two graphs shown in Figure 1. It is clear from the two graphs shown in Figure 1 that the James River ST 542 paper filter element retains a much higher proportion of dust particles having an average size within the range of 4 to 28 micrometres in diameter than does the standard paper filter element.

Bearing this in mind, applicants set out to find a paper filter element which would provide the fine filtering properties displayed by a paper filter element containing glass fibre such as the James River ST 542 paper filter element, without the use of glass fibres as such.

Example 1:

A paper filter element according to the present invention was made from a mixture of cellulose fibres and viscose rayon fibres which contained 22% by weight of viscose rayon fibres having an average diameter in the range of 10 to 12 micrometres and an average length of 6 millimetres, the cellulose fibres present having an average thickness of 20 to 30 micrometres. The paper filter element thus produced displayed an air resistance of 243.20 Pa (24.8 mm water gauge), measured using a commercially-available tester sold under the trade name of an Evans Adlard tester with air flowing through the filter element supported across a 10 cm² orifice at a flow rate of 20 l/min. The thickness of the paper filter element was 865 micrometres. The paper filter element was given the designation "Jointine PT 3490/1", and is hereinafter referred to in this specification under that designation.

Example 2:

A paper filter element according to the present invention was made from a mixture of cellulose fibres and viscose rayon fibres which contained 30% by weight of viscose rayon fibres having an average diameter in the range of 10 to 12 micrometres and an average length of 6 millimetres, the cellulose fibres present having an average thickness of 20 to 30 micrometres. The paper filter element thus produced displayed an air resistance of 235.36 Pa (24.0 mm water gauge), measured using an Evans Adlard tester with air flowing through the filter element supported across a 10 cm² orifice at a flow rate of 20 l/min. The thickness of the paper filter element was 935 micrometres. The paper filter element was given the designation "Jointine PT 3490/2A", and is hereinafter referred to in this specification under that designation.

Comparison tests were then carried out on samples of Jointine PT 3490/1 and Jointine PT 3490/2A paper filter elements against samples of James River ST 542 paper filter element containing glass fibre. James River ST 542 paper filter element used for the samples contained 5% by weight of glass fibre, had an air resistance of 249.09 Pa (25.4 mm water gauge), and had a thickness of 880 micrometres.

1) Initial Particle Retention Efficiency Tests:

Samples of all three paper filter elements were tested to AC Spark Plug specification P 5244, using Vitrea 100[(R.T.M)] oil of 24 mm²/s (24 centistoke) viscosity and Motor Industry Research Association (MIRA) test powders sold under the trade names of test powders G2, G3, Aloxite 225 and G4. The mean particle size of test powder G2 was 6.9 micrometres. The mean particle size of test powder G3 was 13.6 micrometres. The mean particle size of test powder Aloxite 225 was 19.5 micrometres. The mean particle size of test powder G4 was 30.1 micrometres. The test results obtained are shown in Figure 2 of the accompanying drawings. It can be seen from Figure 2 that both the Jointine PT 3490/1 paper filter element and the Jointine PT 3490/2A paper filter element display higher particle retention efficiencies than the James River ST 542 paper filter element over effectively the same range of particle size.

## Table 1

| Filter Media | Paper Area cm² | 98% Particle Retention micrometres | 95% Particle Retention micrometres |
|---|---|---|---|
| Jointine PT 3490/1 | 1310 | 19 | 17 |
| Jointine PT 3490/2A | 1310 | 22 | 18.5 |
| James River ST 542 | 1310 | 23 | 19 |

As can be seen from Table 1, both of the paper filter elements according to the invention retained particles of a smaller average diameter, both at a 98% retention efficiency and at a 95% retention efficiency, than did the James River ST 542 paper filter element.

2) <u>Full Flow Rig Life and Efficiency to SAE HS J806 Specification:</u>

Samples of all three paper filter elements were tested for full flow rig life and efficiency using the SAE test procedure outlined in HS J806, June 1983, Chapter 2. The tests were carried out on PF 47 oil filters manufactured at the applicants' premises in Southampton using said samples, on the basis of a filter size rating class C. A PF 47 oil filter is a trade name used by the applicants to denote an oil filter of a specified size, shape and filtering efficiency that the applicants manufacture and sell. The tests involved using Shell X100/30 (R.T.M) engine oil at 82°C and a flow rate of 12 l/min, with a standard abrasive dust contaminant known under the trade name of A.C. fine test dust being added at the rate of 0.5 mg/s (1.8 gms/h), and determining the pressure difference in kPa across the test oil filters at regular, predetermined intervals of time. The "full flow rig life" of the test filter is defined as being the time in hours that it takes the pressure difference across the test filter to reach a stable, substantially unchanging value which effectively indicates complete blockage of the pores of the filter element by the dust contaminant. The full flow rig life of a paper filter element constitutes only a rough guide to the service life of the paper filter element when used as an oil filter in an internal combustion engine, but a full flow rig life of at least 5 hours for a paper filter element would be considered necessary to confidently predict a long service life for that element.

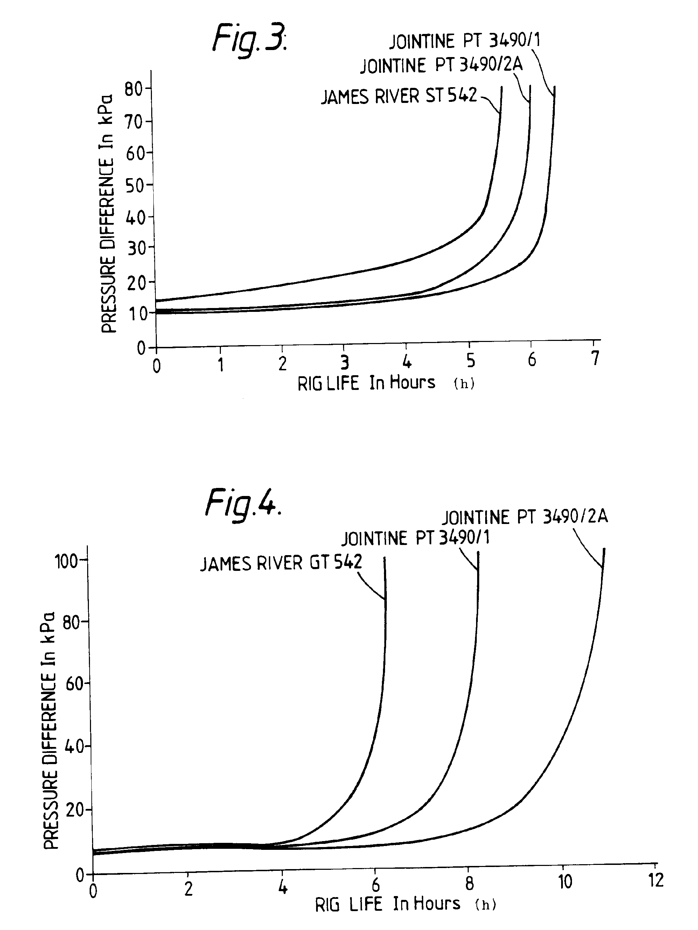

The results of these tests are shown graphically in Figure 3 of the accompanying drawings, from which it can clearly be seen that the full flow rig life for both the Jointine PT 3490/1 and the Jointine PT 3490/2A paper filter elements substantially exceeds the full flow rig life of the James River ST 542 paper filter element. The results of the tests are summarised in Table 2 below.

<div align="center">

### Table 2

</div>

| Filter Media | Full Flow Rig Life hours | Dust Held grams | Dust Capacity $mg/cm^2$ | Weighted Average Efficiency (%) |
|---|---|---|---|---|
| Jointine PT 3490/1 | 6.5 | 10.46 | 7.98 | 86.84 |
| Jointine PT 3490/2A | 6.1 | 9.75 | 7.44 | 91.72 |
| James River ST542 | 5.62 | 9.11 | 6.95 | 86.90 |

The results given in Table 2 indicate that both of the Jointine paper filter elements have a dust capacity superior to that of the James River paper filter element, and that the weighted average efficiency of the Jointine PT 3490/2A paper filter element is better than either of the other two papers.

3) <u>Full Flow Rig Life and Cumulative Efficiency to AC Spark Plug Specification P 5262:</u>

Samples of all three paper filter elements were tested for full flow rig life and cumulative efficiency using an AC Spark Plug Specification P 5262 testing procedure. The tests were carried out on PF 47 oil filters manufactured at the applicants' premises in Southampton using said samples. The tests involved using Shell X100/30 (R.T.M) engine oil of a viscosity of 24 mm²/s (24 centistokes) and a flow rate of 7 l/min, with a standard high carbon-content sludge contaminant known under the trade name of SOFTC 2A (which is very similar in composition to the engine sludge removed by oil filters used on internal combustion engines) being added at the rate of 0.97 mg/s (3.5 gms/h), and determining the pressure difference in kPa across the test oil filters at regular, predetermined intervals of time.

The results of these tests are shown graphically in Figure 4 of the accompanying drawings, from which it can clearly be seen that the full flow rig life for both the Jointine PT 3490/1 and the Jointine PT 3490/2A paper filter elements markedly exceeds the full flow rig life of the James River ST 542 paper filter element, and that the full flow rig life of the Jointine PT 3490/2A paper filter element is considerably longer than the full flow rig life of the Jointine PT 3490/1 paper filter element. The results of the tests are summarised in Table 3 below.

## Table 3

| Filter Media | Full Flow Rig Life hours | Paper Area cm² | Solids Capacity mg/sq.cm. | Final Cumulative Efficiency (%) |
|---|---|---|---|---|
| Jointine PT 3490/1 | 8.25 | 1310 | 12.2 | 55.7 |
| Jointine PT 3490/2A | 11.0 | 1310 | 18.3 | 61.2 |
| James River ST 542 | 6.5 | 1310 | 10.6 | 61.1 |

The results shown in Table 3 clearly indicate that both of the Jointine paper filter elements have a full flow rig life with SOFTC 2A contaminant which is much superior to that of the James River paper filter element. Bearing in mind the fact that SOFTC 2A contaminant is much closer to the contaminants that the paper filter elements used in internal combustion engines remove from the engine oil thereof, the superior full flow rig lives exhibited by the Jointine paper filter elements indicate that oil filters containing such paper filter elements are likely to last much longer in service without needing replacement. Moreover, the Jointine PT 3490/2A paper filter element also displays a slightly better cumulative efficiency than that displayed by the James River paper filter element.

4) Flowrate/Restriction Tests:

Flowrate/restriction tests were carried out on samples of the three paper filter elements, using hot engine oil at a viscosity of 24 mm²/s (24 centistokes) in a first series of tests, and using cold engine oil at a viscosity of 500 mm²/s (500 centistokes) in a second series of tests. The tests were carried out on PF 47 oil filters manufactured at the applicants' premises in Southampton using said samples.

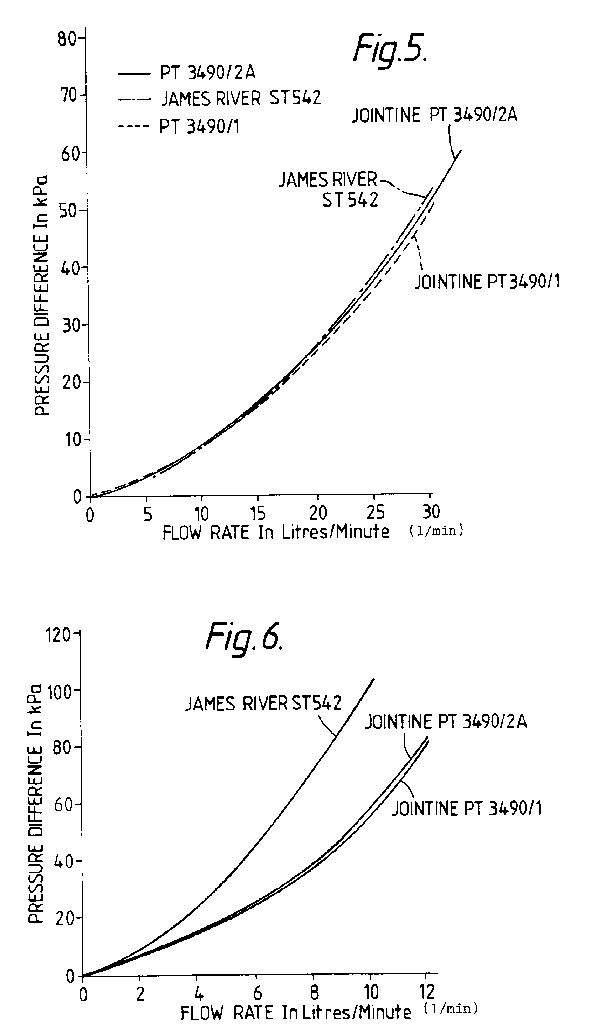

The first series of tests involved using Shell X100/30 (R.T.M) engine oil of a viscosity of 24 mm²/s (24 centistokes) at a temperature of 74°C, and monitoring the pressure difference in kPa displayed across the test filter against the flow rate of the engine oil in l/min through the filter. The results of this first series of tests are shown graphically in Figure 5 of the accompanying drawings.

The second series of tests involved using Vitrea 460 (R.T.M) engine oil of a viscosity of 500 mm²/s (500 centistokes) at a temperature of 39°C, and monitoring the pressure difference in kPa displayed across the test filter against the flow rate of the engine oil in l/min through the filter. The results of this second series of tests are shown graphically in Figure 6 of the accompanying drawings.

The results shown in Figure 5 indicate that that the flowrate restriction characteristics exhibited by all three paper filter elements are similar to one another when filters containing those elements are used to filter hot engine oil. The results shown in Figure 6, however, indicate that, for cold oil at a viscosity of 500 mm²/s (500 centistokes), the James River paper filter element displays a much higher resistance to fluid flow of oil than does either of the Jointine papers. Consequently, the use of a paper filter element according to the present invention, such as Jointine PT 3490/1 or Jointine PT 3490/2A, in an oil filter in an internal combustion engine provides a means of ensuring a much faster passage of cold engine oil through the filter element upon starting the internal combustion engine than could be achieved with an oil filter incorporating a James River ST 542 paper filter element.

Applicants have succeeded in producing a range of paper filter elements containing predefined proportions of viscose rayon fibre, for use both in air filters and oil filters, particularly oil filters, which filter elements display improved filter characteristics such that, in some respects, the filter elements are as good as known paper filter elements containing glass fibres, and, in other respects, the filter elements are better than said known paper filter elements containing glass fibres.

## Claims

1. A paper filter element for filtering solid material from a fluid, said paper filter element being formed from a variety of fibres, <u>characterised in that</u> the fibres comprise a mixture of cellulose fibres and viscose rayon fibres which contains at least 15% by weight of viscose rayon fibres having an average diameter in the range of 10 to 12 micrometres ($\mu$m) and an average length of 6 mm, and in which the cellulose fibres have an average thickness of 20 to 30 micrometres; said paper filter element has a thickness of 800 to 1000 micrometres; and said paper filter element has an air resistance of at least 88.26 Pa (9 mm water gauge), as measured by using an Evans Adlard tester with air flowing through the filter element supported across a 10cm$^2$ orifice at a flow rate of 20 l/min.

2. A paper filter element according to claim 1, in which the paper filter element contains 15% to 35% by weight of said viscose rayon fibres.

3. A paper filter element according to claim 1 or 2, for filtering solid material from vehicle engine oil, in which the air resistance of the paper filter element is in the range of 205.94 to 264.78 Pa (21 to 27 mm water gauge).

4. A paper filter element according to claim 3, in which the [full flow] rig life, measured according to the SAE HS J806 specification, of the paper filter element is at least 5 hours, and the paper filter element, when in use, retains 95% to 98% of all particles present in the oil to be filtered that have an average diameter in the range of 17 to 22 micrometres.

## Patentansprüche

1. Ein Papierfilterelement zum Filtern eines festen Materials aus einem Fluid, wobei das Papierfilterelement aus einer Vielzahl von Fasern gebildet wird, <u>dadurch gekennzeichnet, daß</u> die Fasern eine Mischung aus Zellulosefasern und Viskosereyonfasern aufweisen, welche mindestens 15 Gewichtsprozent an Viskosereyonfasern mit einem mittleren Durchmesser in dem Bereich von 10 bis 12 Mikrometer ($\mu$m) und einer mittleren Länge von 6 mm, und in welcher die Zellulosefasern eine mittlere Dicke von 20 bis 30 Mikrometer besitzen; daß das Papierfilterelement eine Dicke von 800 bis 1000 Mikrometer hat; und daß das Papierfilterelement einer Luftwiderstand von mindestens 88,26 Pa (9 mm Wassersäule) hat, wie gemessen unter Verwendung eines Evans Adlard Prüfgerätes mit durch das Filterelement strömender Luft, das über einer 10 cm$^2$ Öffnung bei einer Flußrate von 20 l/min gehalten wird.

2. Ein Papierfilterelement nach Anspruch 1, in welchem das Papierfilterelement 15 bis 35 Gewichtsprozent von den Viskosereyonfasern enthält.

3. Ein Papierfilterelement nach Anspruch 1 oder 2 zum Filtern eines festen Materials aus einem Fahrzeugmotorenöl, in welchem der Luftwiderstand des Papierfilterelements in dem Bereich von 205,94 bis 264,78 Pa (21 bis 27 mm Wassersäule) liegt.

4. Ein Papierfilterelement nach Anspruch 3, in welchem die Ausrüstungslebensdauer bei vollem Fluß des Papierfilterelements, gemessen gemäß der SAE HS J806 Spezifikation, mindestens 5 Stunden beträgt und das Papierfilterelement beim Gebrauch 95% bis 98% aller, in dem Öl vorhandenen, zu filternden Teilchen zurückhält, die einen mittleren Durchmesser in dem Bereich von 17 bis 22 Mikrometer besitzen.

## Revendications

1. Elément filtrant en papier pour la filtration d'un matériau solide à partir d'un fluide, ledit élément filtrant en papier étant formé de plusieurs fibres, caractérisé en ce que ces fibres comprennent un mélange de fibres de cellulose et de fibres de rayonne de viscose qui contiennent au moins 15 % en poids de fibres de rayonne de viscose dont le diamètre moyen est compris entre 10 et 12 μm et la longueur moyenne vaut 6 mm, et dans lequel les fibres de cellulose ont une épaisseur de 20 à 30 μm; ledit élément filtrant en papier ayant une épaisseur de 800 à 1000 μm; et ledit élément filtrant en papier ayant une résistance à l'air d'au moins 88, 26 Pa (9 mm de colonne d'eau), mesurée à l'aide d'un appareil d'essai Evans Adlard avec de l'air passant à travers l'élément filtrant par un orifice de 10 cm² et avec un débit de 20 l/min.

2. Elément filtrant en papier selon la revendication 1, dans lequel l'élément filtrant en papier contient de 15% à 35 % en poids desdites fibres de rayonne de viscose.

3. Elément filtrant en papier selon la revendication 1 ou 2, pour la filtration d'un matériau solide à partir d'une huile pour moteur de véhicule, dans lequel la résistance à l'air de l'élément filtrant en papier est comprise entre 205,94 et 264,78 Pa (21 à 27 mm de colonne d'eau).

4. Elément filtrant en papier selon la revendication 3, dans lequel la durée de vie de l'équipement en plein débit, mesurée selon la norme SAE HS J806, de l'élément filtrant en papier est d'au moins 5 heures, et l'élément filtrant en papier retient, en service, de 95 % à 98 % de toutes les particules présentes dans l'huile à filtrer, dont le diamètre moyen est compris entre 17 et 22 μm.

Fig.1.

Fig.2.

Fig. 3.

Fig. 4.

Fig.5.

PT 3490/2A
JAMES RIVER ST542
PT 3490/1

JOINTINE PT 3490/2A

JAMES RIVER ST542

JOINTINE PT3490/1

PRESSURE DIFFERENCE In kPa

FLOW RATE In Litres/Minute (1/min)

Fig.6.

JAMES RIVER ST542

JOINTINE PT 3490/2A

JOINTINE PT 3490/1

PRESSURE DIFFERENCE In kPa

FLOW RATE In Litres/Minute (1/min)

10